# EUROPEAN PATENT APPLICATION

(11) **EP 4 439 894 A1**
(43) Date of publication of application: **02.10.2024**
(21) Application number: 23166148.9
(22) Date of filing: 31.03.2023
(51) Int. Cl.: H02G 15/08, H02G 15/34, F16L 25/01, H01R 4/68, H01B 12/02, H01B 12/16, H01R 13/52, F16L 39/00, F16L 59/18

(54) **A CRYOSTAT JOINT ASSEMBLY**

(71) Applicant: Supernode Limited, D18 V8P6 Dublin (IE)
(72) Inventor: Hodge, Eoin, Dublin (IE); Doyle, Stephen, Dublin (IE); Rogers, Ciaran, Dublin (IE); Carlisle, Andrew, Dublin (IE)
(74) Representative: FRKelly

(57) **Abstract**

The present invention is concerned with a cryostat joint assembly for use in joining superconducting cables, in particular for simplifying the connection between the cables while ensuring a robust electrical and mechanical connection, the joint assembly including first and second endcaps each terminating one of the cables, each end cap including an electrically conductive tubular plug, and a coupling connectable between the first and second end caps and defining first and second tubular sockets for receiving the first and second plugs such as to provide a cryogen conduit extending through and defined by the pair of plugs and sockets to simultaneously enable the flow of cryogen and electrical current through the joint assembly.

## Description

### Field of the invention

The present invention is concerned with a cryostat joint assembly for connecting a pair of superconducting cables and which facilitates simple field connections between the ends of the separate cryostat based superconducting cables, ensuring electrical continuity while maintaining a continuous flow of cryogenic fluid during operation across the joint between the cables, resisting standard loads and minimizing heat transfer from external sources.

### Background of the invention

A high capacity superconducting power cable includes a central core comprising multiple fine strands or tapes, which may be either wrapped around a former inside, or composed of, a cryogen flow channel. The core may be held at an electrical potential of typically 80-320 kV above or below the potential of the outer casing of the cable. Electrical continuity in long-distance high temperature superconductor (HTS) systems is achieved through complex and time-consuming splicing procedures, requiring a high level of process and quality control. This may be difficult to achieve during field connections, particularly for offshore deployment.

It is critical to maintain the HTS core temperature at a sufficiently low value (< 90K) to ensure that the superconducting state is maintained, otherwise the tapes become resistive, develop heat through Joule heating leading to rising temperature potentially resulting in a catastrophic runaway situation. Cooling of the HTS tapes as a standard is achieved by forced convection of a cryogenic fluid. This necessitates a continuous flow path within the superconducting cable system with which the conductor is in direct or indirect contact, similar to pipeline architectures and annular flow systems.

Continuous pipelines and HTS tape manufacturing and deployment processes are often limited to standard or achievable lengths which are around 1 km. For a long-distance superconducting cable system (>5km distance) multiple shorter sections are favourably connected in an efficient way that reduces complexity, maintains connection quality and does not negatively impact the superconducting cable system properties in terms of strength, heat load and fluid flow.

Technologies to connect separate pipe-in-pipe architectures are well-known and considered industry standards. These include welded connections, pipe sleeves, flanges etc. Pipeline construction methods allow these technologies to be used in-line to improve installation speeds.

Standard methods for joining HTS tapes involve variations of soldered or clamped connections between individual tape pairs and simplified connection geometries. Existing technologies address either connection of the HTS tapes or connection of pipe-in-pipe systems but do not address a combined solution that provides continuous cryogen flow in the same conduit as the superconductor while maintaining electrical continuity and thermal stability. Many such superconducting to conventional transitions require an auxiliary cooling system for the copper/conventional conductor.

Inline HTS connection solutions focus on complicated splicing architectures which place an emphasis on process control and product quality instead of manufacturing, deployment speed and operational simplicity, which become paramount in long-distance installations.

It is therefore an object of the present invention to provide a superconductor cryostat joint assembly which simplifies the installation procedure, reduces installation time and cost, which ensuring a robust and reliable connection between the tapes of two superconducting cables and a uninterrupted flow of cryogen across the interface established by the field joint assembly of the invention.

It is a further object of the present invention to provide a superconductor cryostat joint assembly that allows for in-field connection of high temperature superconductor cable modules whilst protecting the superconducting elements and their connection from in-field operations.

It is a still further object of the present invention to provide a a superconductor cryostat joint assembly that allows connection between two superconductor cables with HTS tapes/cores using standard connection interfaces and techniques suitable for current pipeline deployment, and which is resistant to extreme thermal loads and geometrical distortions while maintaining low electrical resistance and high connection quality of HTS and conductor interfaces.

### Summary of the invention

According to the present invention there is provided a cryostat joint assembly for connecting a pair of superconducting cables, the joint assembly comprising first and second endcaps each connectable to a terminal end of one of the cables, each end cap comprising an electrically conductive tubular plug or electrically conductive tubular socket; wherein the first and second end caps are connectable with one another to provide a cryogen conduit extending through and at least partially defined by the respective plug or socket such as to simultaneously enable the flow of cryogen and electrical current through the joint assembly.

Preferably, both end caps comprise electrically conductive tubular plugs, the joint assembly further comprising a coupling connectable between the first and second end caps and defining first and second tubular sockets for respectively receiving the first and second plugs, the pair of sockets being in electrical communication and the coupling partially defining the cryogen flow path extending through the joint assembly.

Preferably, each plug comprises an electrical connector insertable into the corresponding socket and an electrical terminal adapted to be electrically connected to one or more superconducting elements within the respective superconducting cable.

Preferably, an outer sidewall of the terminal comprises one or more channels adapted for the electrical and/or mechanical connection of the one or more superconducting elements.

Preferably, the terminal comprises a series of longitudinally spaced and circumferentially extending channels.

Preferably, the terminal comprises a series of radially spaced and longitudinally extending channels.

Preferably, each end plug comprises a reinforcing element operable to reinforce the electrical and/or mechanical connection of the one or more superconducting elements to the terminal.

Preferably, the or each end cap comprises a cylindrical casing enclosing the terminal and longitudinally beyond which the connector extends, and a mating element for connection to the coupling which extends radially outwardly of the casing.

Preferably, the joint assembly comprises a compressible cryogen seal between each plug and the respective socket, and a compressible environmental seal between the mating element and the coupling, wherein the casing is dimensioned to be axially compressed when the mating element is secured to the coupling by an amount sufficient to maintain the seals under cryogenic operating conditions.

Preferably, each plug comprises a radially outwardly extending circumferential flange located between the connector and the terminal.

Preferably, the coupling comprises first and second anchoring elements adapted to be secured to the respective mating element of the first and second end caps.

Preferably, the environmental seal is established between the mating element and the anchoring element.

Preferably, the coupling comprises a cylindrical housing, an electrically conductive sleeve within the housing defining the pair of sockets in coaxial alignment, and an annular dielectric layer located between the housing and the sleeve.

Preferably, the sleeve comprises at least one radially inwardly extending circumferential lip axially separating the pair of sockets.

Preferably, each socket comprises one or more electrically conductive and resiliently deformable contact elements operable to maintain electrical communication between the respective plug and socket.

Preferably, the one or more contact element comprises at least one circumferentially extending spring located about an interior wall of the socket.

Preferably, the plugs and the sockets are axisymmetric about a longitudinal axis of the cryostat joint assembly.

Preferably, the plugs and socket are configured to be axially self-centring when engaged with one another.

Preferably, the coupling comprises an extraction fluid conduit providing fluid communication between the cryogen flow path within the first socket and an exterior of the coupling, and a return fluid conduit providing fluid communication between the cryogen flow path within the second socket and the exterior of the coupling.

Preferably, each of the extraction fluid conduit and the return fluid conduit are adapted to prevent electrical communication between the first and second socket and the exterior of the coupling.

Preferably, each of the extraction fluid conduit and the return fluid conduit comprise a polymer tube.

Preferably, the end caps and/or the coupling comprises at least one circumferentially extending layer of thermal insulation.

Preferably, the at least one layer of insulation comprises a combination of low-pressure vacuum, solid and/or microporous insulation.

Preferably, the at least one layer of insulation comprises a low-pressure vacuum of between 0.01 Pa and 50 Pa.

Preferably, the at least one layer of insulation establishes an effective thermal conductivity of between 0.04 mW/m.K and 300 mW/m.K.

Preferably, the joint assembly comprises a layer of radiation shielding.

As used herein, the term "field joint" or "field connection" is intended to mean a connection made between the ends of two cables which is established at the location at which the cables are laid for operation, otherwise known as making the connection "in the field".

### Brief description of the drawings

The present invention will now be described with reference to the accompanying drawings, in which:
Figure 1 illustrates a perspective partially cut-away view of a cryostat joint assembly according to an embodiment of the present invention for use in connecting superconducting cables;
Figure 2 illustrates a perspective partially cut-away view of a coupling forming part of the cryostat joint assembly shown in Figure 1;
Figure 3 illustrates a perspective partially cut-away view of one of a pair of end caps forming part of the cryostat joint assembly shown in Figure 1;
Figure 4 illustrates a perspective partially cut-away view of a plug forming part of the end cap shown in Figure 3;
Figure 5 illustrates a sectioned view of a transition between a superconducting cable and a terminal of the plug shown in Figure 4;
Figure 6 illustrates an end of the terminal shown in Figure 5;
Figure 7 illustrates a plurality of superconducting tapes wound onto the terminal shown in Figure 5;
Figure 8 illustrates a sectioned side view of the interface between one of the end caps and the coupling of the cryostat joint assembly;
Figure 9 illustrates a side elevation of one of the end caps forming the cryostat joint assembly;
Figure 10 illustrates an alternative sectioned side view of the interface shown in Figure 9;
Figure 11 illustrates a perspective view of a second embodiment of a cryostat joint assembly according to the invention;
Figure 12 illustrates a perspective view of a third embodiment of a cryostat joint assembly according to the invention;
Figure 13 illustrates a perspective view of a fourth embodiment of a cryostat joint assembly according to the invention; and
Figure 14 illustrates a perspective view of a fifth embodiment of a cryostat joint assembly according to the invention.

### Detailed description of the drawings

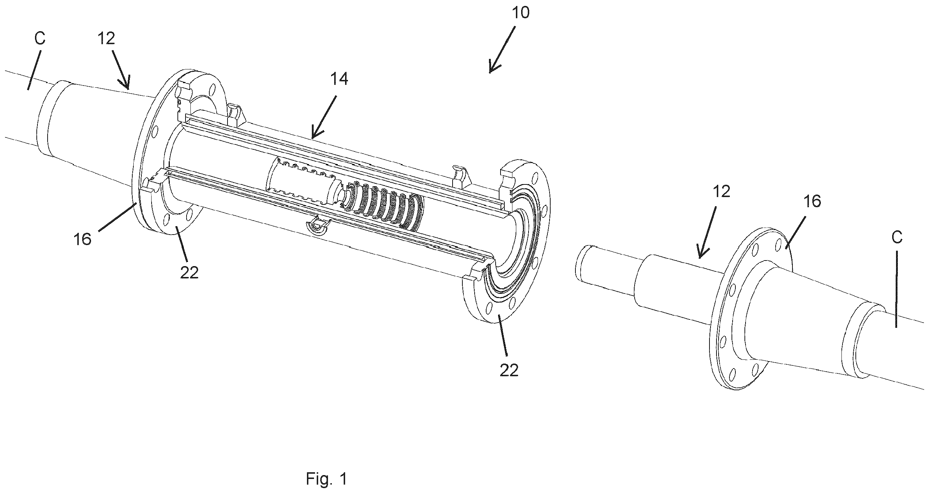

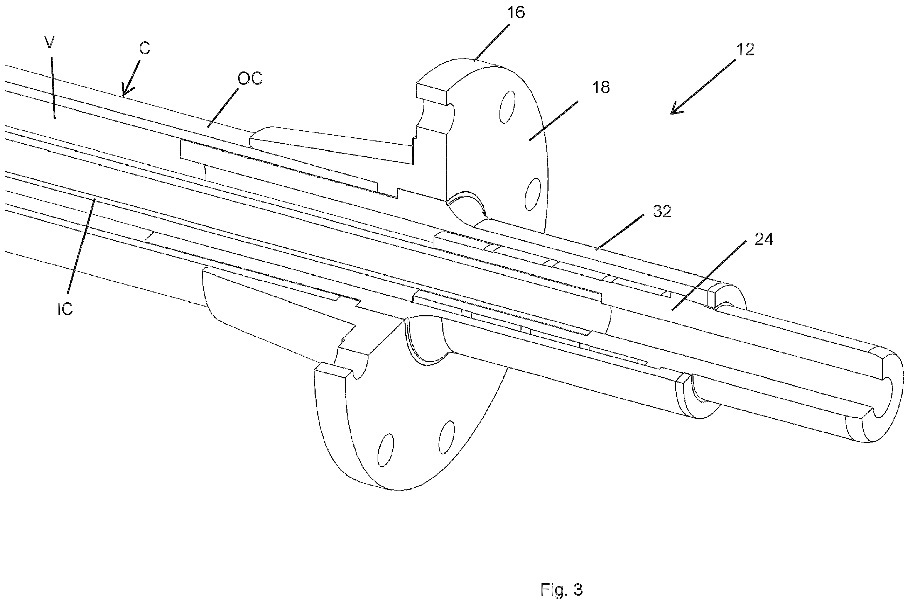

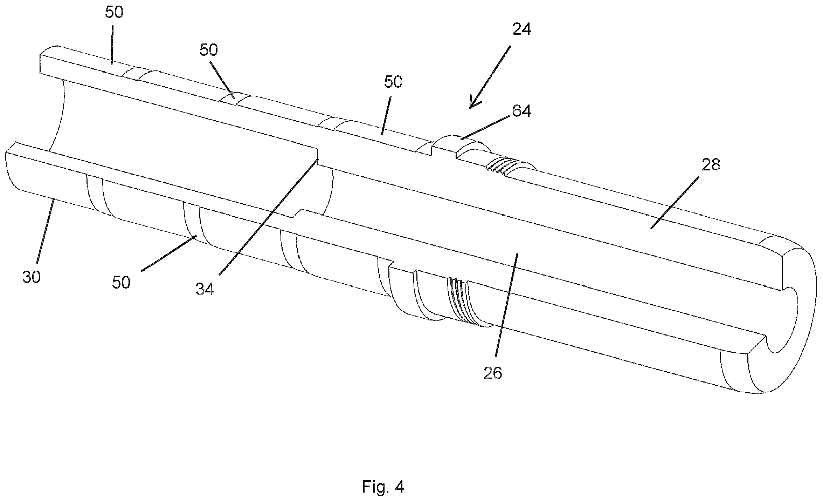

Referring now to Figures 1 to 10 there is illustrated a first embodiment of a cryostat joint assembly according to the present invention, generally indicated as 10, for establishing an end to end connection of a pair of cryostat based superconducting cables C with relative simplicity while ensuring electrical continuity and maintaining a continuous flow of cryogenic fluid during operation.

The cryostat joint assembly 10 comprises a pair of end caps 12, one provided at the free end of each superconducting cable C to terminate same, and a coupling 14 secured intermediate the pair of end caps 12 as described in detail hereinafter, into which coupling 14 each of the end caps may be physically connected with a relatively simply plug and socket type press fitment. In the preferred embodiment illustrated the end caps 12 and coupling 14 are axisymmetric and self-centring in order to further simplify the method of connection, a significant benefit of the invention being to facilitate on site or so called "field" connections, which may for example be performed on a cable laying vessel or in other difficult environments.

The end caps 12 and coupling 14 are preferably physically secured to one another using existing pipeline elements and techniques as described hereinafter, but any other suitable functional alternative may be employed that is operable to establish the connection while ensuring an adequate clamping force can be applied across each connection to maintain suitable physical contact, sealing and electrical connections as detailed hereinafter.

Each end cap 12 of the joint assembly 10 comprises an inner cryostat IC which extends along the full length of the respective cable C and which defines a longitudinally extending cryogen conduit or flow channel along which, during operation, a suitable cryogen (not shown) flows in order to maintain the requisite superconducting temperature of one or more superconducting tapes T which are located in thermal communication with the inner cryostat IC. The cryogen is preferably liquid nitrogen or helium although it is envisaged that other liquid, gaseous or multiphase cryogens or combinations of cryogens may be utilised. A plurality of the tapes T are wound or otherwise located about an exterior surface of the inner cryostat IC although it will be understood that the location and orientation of the tapes T may be varied once thermal communication with the cryogen within the cryogen flow channel is maintained. The inner cryostat IC may be of any suitable dimensions and formed from any suitable material, for example a polymer selected to have the requisite mechanical, thermal and dielectric properties. For example the inner cryostat IC should have low coefficient of thermal expansion (CTE) such as to undergo minimal thermal contraction when filled with the cryogen (not shown). Suitable materials include reinforced polymer composites, epoxy resins, low CTE metals, and nickel alloys with adequate internal dielectric protection allowing bulk power transfer.

Surrounding and enclosing the inner cryostat IC is an outer cryostat OC which defines the exterior of the superconducting cable C and about which the respective end cap 12 is secured. The outer cryostat OC is radially spaced from the inner cryostat IC such as to define a vacuum annulus V within which, in use, a vacuum is established in order to provide thermal insulation. Any suitable vacuum pressure may be applied during operation, and may be achieved by any suitable means, with suitable connections (not shown) being provided into the vacuum annulus V to enable the vacuum to be established and maintained. Various layers of insulation, radiation and dielectric shielding (not shown) may also be provided as required. An exemplary embodiment may include a low-pressure vacuum of between 0.01 Pa and 50 Pa, and the insulation preferably establishes an effective thermal conductivity of between 0.04 mW/m.K and 300 mW/m.K.

The inner cryostat IC and the outer cryostat OC extend into and form integral parts of the respective end cap 12, permitting both electrical and fluid communication between adjacent cables C via the coupling 14. The end cap 12 comprises a mechanical mating element in the form of a radially extending flange 16 defining an environmental sealing face 18 of the end cap 12 and which in use is clamped in face to face engagement with a sealing face 20 of an anchoring element 22 of the coupling 14 which is the form of a correspondingly arranged radially extending flange 22, one at either end of the coupling 14. The sets of flanges 16, 22 may be secured thereto by suitable mechanical fastening means. In the preferred embodiment illustrated conventional pipeline fastenings (not shown) are employed, such as a circumferential array of nuts and bolts (not shown) but it will be understood that any functional equivalent may be employed, for example welding, etc.

The end cap 12 comprises an electrically conductive plug 24 which extends axially through the end cap 12 and projects forwardly or outwardly beyond the flange 16. The plug 24 is tubular in form such as to define a cryogen fluid flow channel 26 extending axially therethrough, and is formed of a high-electrical conductive material such as copper or other suitable material. The plug 24 comprises a connector end 28 defined at the projecting or exposed end and which is adapted for mating with the coupling 14, and a terminal end 30 at the opposed end which is encapsulated within a surrounding casing 32 of the end cap 12, the terminal 30 being adapted for electrical and mechanical connection to the plurality of superconducting tapes T within the cable C as described and shown hereinafter. The cryogen flow channel 26 of the plug 24 is in fluid communication with the inner cryostat IC of the cable C which preferably extends partially internally of the terminal end 30 of the plug 24 to ensure a fluid tight union therebetween. A radially extending shoulder 34 may be provided as an abutment against which the inner cryostat IC may be engaged to provide a robust engagement and seal. Further sealing means such as adhesives or the like may be provided between the inner cryostat IC and the plug 24. The direct contact of the plug 24 with the cryogenic fluid cools the plug 24 to a lower temperature, with the benefit of lowering the electrical resistance of the plug 24 and helping to maintain the temperature of the superconducting tapes T connected thereto below their superconducting critical temperature.

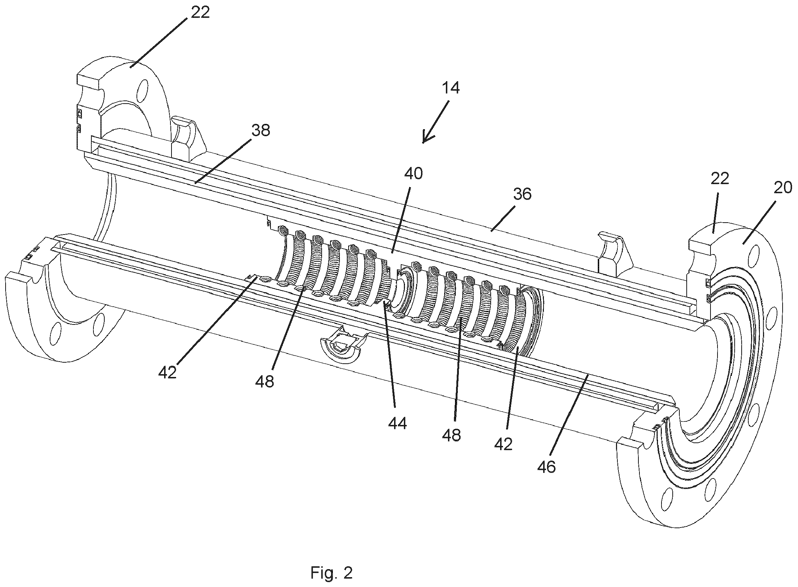

Referring now in particular to Figure 2 the coupling 14 comprises a cylindrical housing 36 opposed open ends of which are defined by the flanges 22 which extend radially outwardly of the housing 36. The housing 12 may be formed of any suitable material, and in the embodiment illustrates is fabricated from stainless steel. Stainless steel is selected to ensure that the housing 36 can resist corrosion that may occur in a saline-rich environment such as offshore or subsea, alongside external hydrostatic pressure of 10-20 bar (for 100-200m water depth). For terrestrial applications resisting degradation caused by oxygen-rich environments will likely be more critical. In either situation, materials other than stainless steel may be used assuming said materials can resist the conditions and loads applicable. Examples of suitable materials include high strength reinforced polymer composite materials or carbon steel.

The coupling 14 further comprises an inner sidewall 38 located concentrically within the housing 36 and between which may be provided insulation in various forms, for example the provision of a vacuum thermal insulation system (not shown) and/or incorporating insulating materials such as multi-layer insulation (MLI), layered composite insulation (LCI), or microporous insulation. Located in the interior of the coupling 14 is a sleeve 40 which is of tubular configuration and formed of a high-electrical conductive material such as copper or other suitable material. The sleeve 40 defines a socket 42 at either end thereof and which are shaped and dimensioned to receive the connector end 28 of the respective plug 24 when the end caps 12 are pressed into engagement with the coupling 14 in order to establish both electrical and fluid communication across the joint assembly 10 as will be described further hereinafter. The sleeve 40 which may be divided by a radially inwardly extending inner rim 44 such as to define the opposed and axially aligned pair or sockets 42 and provide a positive stop or abutment against which each of the connectors 28 of the plugs 24 are contacted on full insertion. Disposed between the sleeve 40 and the housing 36 is a dielectric layer or liner 46 which provides electrical isolation to the sleeve 40. The liner 46 is of tubular form and is preferably located directly against the inner sidewall 38. The liner 46 may be formed from any suitable material, for example a polymer material which has sufficient dielectric strength as to resist the difference in electrical potential between the housing 36 and the sleeve 40. Other materials with a sufficiently high dielectric strength and ability to withstand cryogenic temperatures may also be utilized to form the liner 46, such as fibre reinforced composites or epoxies.

The pair of opposed sockets 42 are axially dimensioned to fully receive and retain the connector end 28 of the respective plug 24, which is exposed and thus can establish an electrically conductive interface with the inner bore of the socket 42 to enable the flow of electrical current from the plug 24 of one end cap 12, across the sleeve 40 defining the pair of sockets 42, to the plug 24 of the other end cap 12. In addition the joint assembly 10 simultaneously defines a continuous fluid flow path through the connected plugs 24 and sockets 42, with the fluid flow channel 26 of the pair of plugs 24 being in register with one another when the two end caps 12 are fully inserted in the coupling 12. The rim 44 separating the sockets 32 preferably has the same inner dimeter as the diameter of the fluid flow channel 26 in order to avoid turbulence and frictional heat generation at the interface between the flow channels 26 of the opposed end caps 12. Similarly the diameter of the inner cryostat IC and the inner diameter of the shoulder 34 are the same as the diameter of the fluid flow channels 26. Thus it can be seen that the plugs 24 and sockets 42, being the same components that provide the electrical path across the joint assembly 10, additional define the cryogen fluid flow path.

The coupling 14 is preferably provided with a contact element operable to establish a robust electrical and preferably also mechanical interface between the connector 28 when inserted within the respective socket 42, which in the embodiment illustrated is in the form of a series of axially spaced and circumferentially extending springs 48 located and projecting outwardly from the inner wall of the socket 42. The connector 28 preferably has an outer diameter marginally less than the inner diameter of the socket 42 and as a result the springs 48 are compressed against the connector 28 when inserted into the socket 42, which thus acts to remain in electrical contact with the connector 28 and ensure a continuous electrical and preferably mechanical connection despite issues such as thermal contraction, manufacturing tolerances, bending or twisting of the cables C and the joint assembly 10 in operation, or any other operational factors which might have a bearing on the interface. It will of course be understood that this functionality may be achieved in other ways such as by a direct interference fit between the connector 28 and socket 42, alternative spring based contacts, or otherwise. As a preferred secondary function the springs 48 provide a level of resistance to physical separation or withdrawal of the connector 28 from the socket 42. The springs 48 also provide a self-centring function to the connector 28 and socket 42 and thus in general to the end caps 12 and coupling 14. This self-centring functionality is beneficial during the installation procedure, and it will be understood that it may be achieved by other means.

To further ensure this electrical transmission continuity the terminal end 30 of each plug 24 is preferably adapted to ensure a robust electrical and mechanical interface with the ends of the plurality of superconducting tapes T in each end cap 12. The terminal end 30 is provided with a plurality of channels 50 for receiving the tapes T in a particular configuration, the channels 50 being in the form of a series of axially or longitudinally spaced and circumferentially extending channels 50 of decreasing diameter. The number of the channels 50 corresponds to the number of layers of superconducting tapes T and any additional layers such as copper, aluminium or other electrically conductive tape layers (not shown) that are wound around the inner cryostat IC within the cable C. In the embodiment illustrated the steps or channel 50 having the greater axial length are for securing the superconducting tape layers T while the channels 50 having the shorter axial length are for securing copper (or other appropriate material) tape layers (not shown). The height or radial thickness of the channels 50 can be tuned to match the thickness of the superconductor and copper (or other appropriate material) tape layers, which allows each tape layer to be smoothly laid on top of one another without any potential stress concentration points being developed (by sharp edges etc.), which could damage the superconducting layer of the tapes T. The various tapes may be secured to the channels 50 by suitable means such as soldering, epoxy potting, etc.

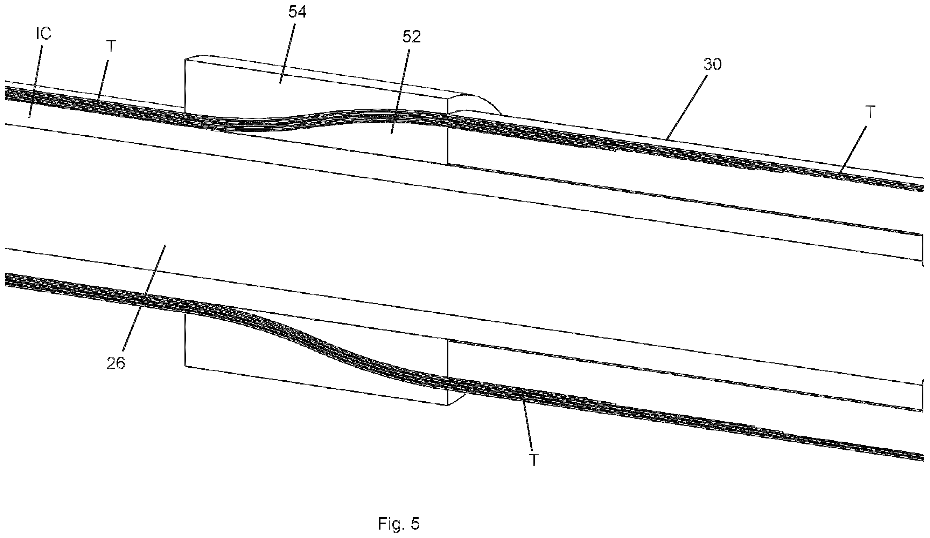

Referring to Figure 5, in order to further provide a smooth transition for the tape layers from being wrapped around the inner cryostat IC to being fixed to the larger diameter of the terminal end 30 of the plug 24, a tapered transition piece or ramp 52 may be utilised. The ramp 52 may be formed of any suitable material, preferably a dielectric material such as a suitable polymer. The geometry of the polymer ramp 52 must be tuned to ensure that no stress concentrations are generated that may damage the superconducting layer of the tapes T, which may be achieved through the use of curved profiles that match or exceed the minimum bending radius (MBR) of the superconducting tapes T, as stated by the manufacturer. To help the tape layers conform to the profile of the polymer ramp 52, a reinforcing element in the form of a clamp 54 having a matching transitional geometry may also be secured concentrically around the ramp 52 once the tapes T are in place, with the clamp 54 being suitably secured in position, whether by mechanical fastening, adhesives, etc. It may also be possible to integrate this ramp profile into the free end of the terminal 30. Where the cable C comprises multiple tape layers and the use of a single ramp 52 and clamp 54 set for all of the layers of tape is not suitable, it is possible to use a nested set of ramps and clamps where the clamps for one tape layer to act as the ramps for another tape layer. The materials for these ramps and clamp pieces should be mechanically compatible at cryogenic temperatures and have sufficient dielectric strength to not interfere with the electrical operation of the superconducting tapes T.

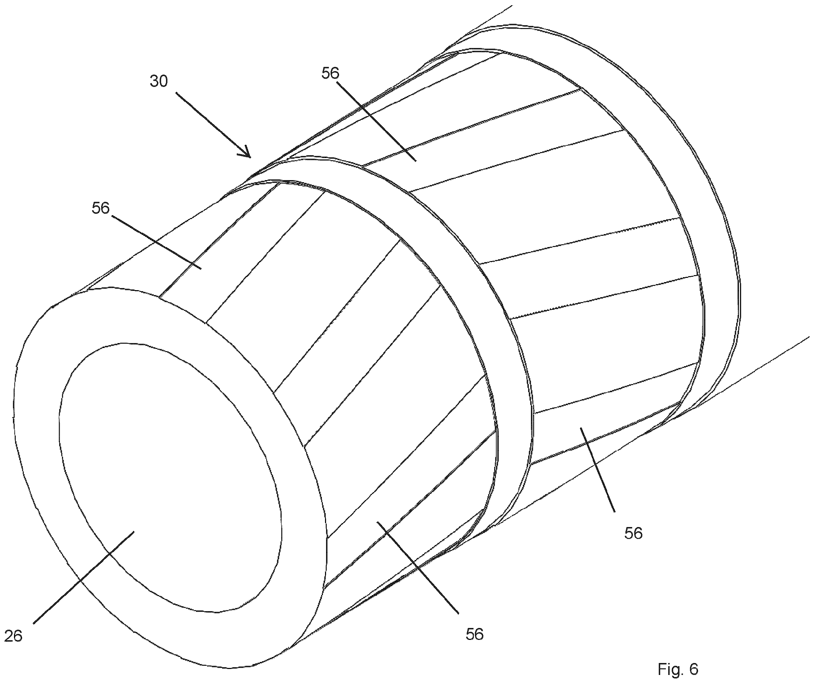

Another method of improving the transition of the tapes T from the inner cryostat IC to the plug 24 is to provide additional geometrical locating features on the terminal 30 that assist in positioning the tapes T during assembly. An exemplary feature is a series of radially spaced and longitudinally extending channels 56 at the free end of the terminal 30 as illustrated in Figure 6 into each of which a superconducting tape T may be located and suitable secured.

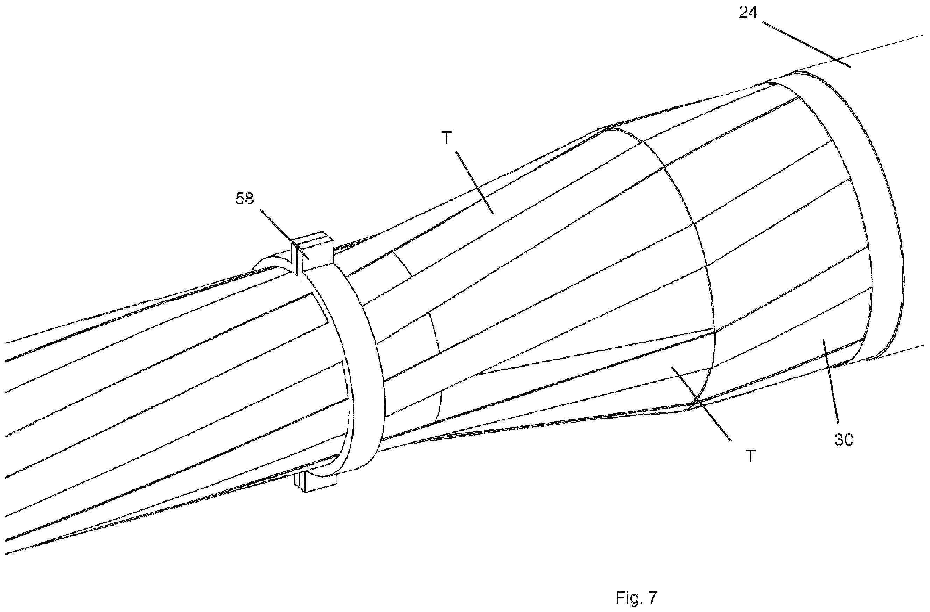

Ensuring such a robust electrical and mechanical connection between the tapes T and the terminal 30 is of significant importance to the operation of the joint assembly 10. The integrity of this connection (e.g. a soldered joint) may be threatened by tensile loads on the tapes T caused by thermal contraction, bending and/or tensile loading of the cables C. To reduce this risk, methods of strain relief on the superconducting tape T connections are preferably incorporated into the joint assembly 10. One exemplary solution is to mechanically restrain the tapes T on the inner cryostat IC a short distance from the connection with the terminal 30 (e.g. 100-500mm) in order to allow for slack to be built into the distance from this restrained area to the tape/terminal connection which would reduce the strain induced by thermal contraction etc.. This may be achieved using a clamping type restraint 58 encircling the tapes T as shown for example in Figure 7, or may be in the form of polymer tape windings, or an epoxy potting compound with sufficient bond strength with the tapes T and inner cryostat IC such as to provide the necessary restraint. The design/material choice of the restraint 58 could be selected such as to ensure any circumferential dimensional change of the inner cryostat IC caused by the thermal differential is compensated for. Additionally or alternatively a clamp, polymer tape winding, or epoxy potting compound (not shown) may be employed to directly mechanically secure the tapes T to the plug 24.

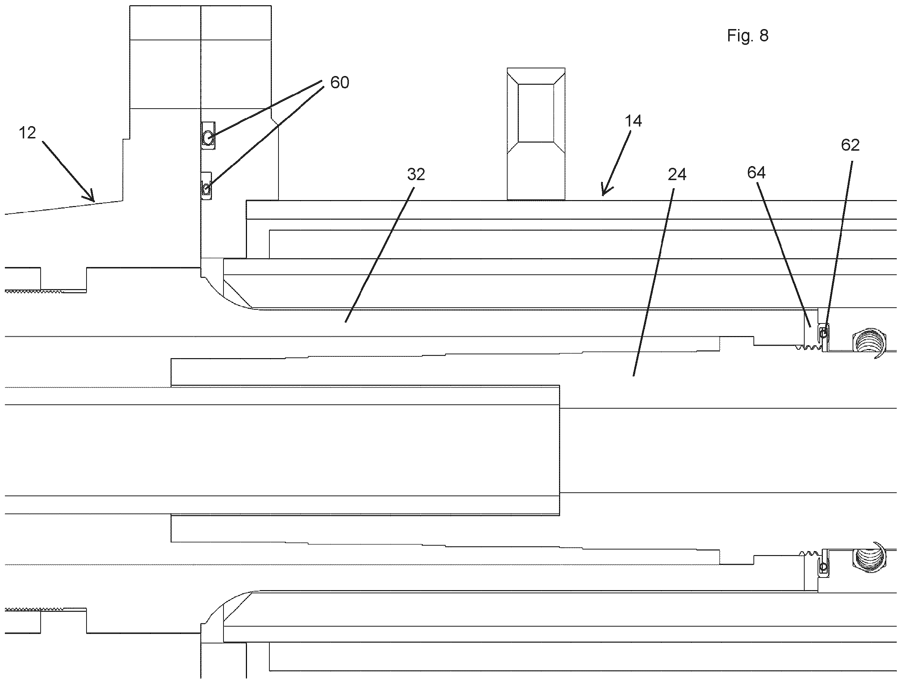

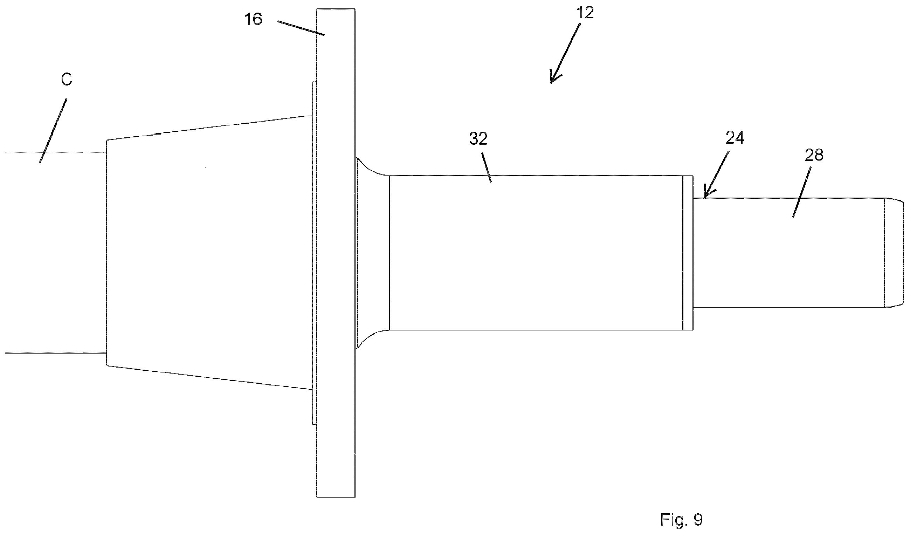

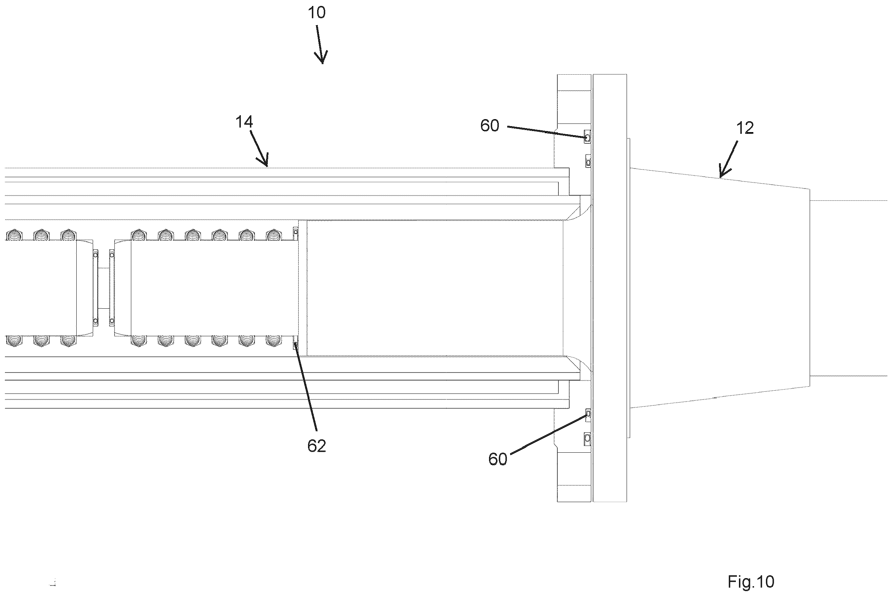

In addition to ensuring electrical continuity during operation, the joint assembly 10 is also adapted to ensure a fluid tight environment is maintained, both to ensure cryogen retention and the prevent the ingress of any environmental contaminants into the joint assembly 10 during operation. Referring in particular to Figures 8 to 10 the interface between one of the end caps 12 and the coupling 14 is illustrated, with the end cap 12 shown in isolation in Figure 9. The joint assembly 10 is configured to utilise the mechanical and thermal properties of materials used in the end cap 12 to ensure that seals are maintained between the end cap 12 and coupling 14 during both the assembly phase (at ambient temperature) and operational phase (at cryogenic temperature) despite the large temperature differential and the challenges this presents. In particular the joint assembly 10 is provided with a pair of environmental compression seals 60 located between the flanges 16, 22 and which are therefore compressed when the flanges 16, 22 are mechanically secured in face to face engagement as hereinbefore described. These seals 60 are intended to keep out environmental contaminants. The joint assembly 10 further comprises a cryogen seal 62 disposed between the end of the casing 32 and the free end of the corresponding socket 42. The free end of the casing 32 may however be seated against a circumferentially extending rib 64 which is provided on or formed integrally with the plug 24, and which effectively delineates the connector end 28 and the terminal end 30. In that case the cryogen seal 62 is clamped between the rib 64 and the free end of the socket 42 shown in Figure 10, and provides a seal against the escape of cryogen from the cryogen flow channel 26.

In order to ensure that both sets of sealing faces between which the seals 60, 62 are compressed remain in contact during thermal contraction, the casing 32 surrounding the terminal end 30 is designed to be longer that the distance between the environmental and cryogenic sealing faces, namely the flange 16 and the end face of the socket 42. By tuning the magnitude of this additional length and by selecting a material for the casing 32 with an appropriate co-efficient of thermal expansion (CTE) and cryogenic mechanical properties, it is possible to compress the casing 32 during the assembly of the end cap 12 into coupling 14 which generates a mechanical preload at the environmental and cryogen sealing faces. The extent of this preload will be sufficiently low so as to avoid damaging the various components under load, but high enough that gaps between the sealing faces that would be generated by the differential thermal contraction will be filled by the expansion of the casing 32 as the preload is relaxed, such gaps being shown in Figure 10 for illustrative purposes. Thus both sealing faces will remain in contact from assembly through to operation ensuring that the seals 60, 62 remain compressed and therefore effective. Suitable candidate materials for the casing 32 may include thermoplastics, thermosets and reinforced versions thereof.

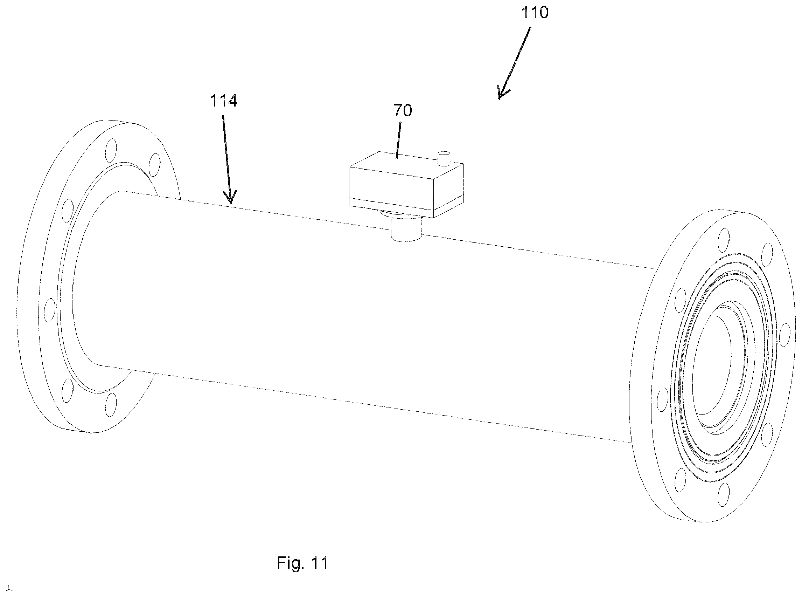

Referring to Figure 11 a second embodiment of a cryostat joint assembly is illustrated, generally indicated as 110. In this alternative embodiment like components have been according like reference numerals and unless otherwise stated perform a like function. The joint assembly 110 comprises a coupling 114 essentially as hereinbefore described into which a pair of the end caps 12 of the first embodiment may be connected as also described. The joint assembly 110 is however additionally provided with an instrument assembly 70 fitted to the coupling 114 and including components (not shown) for condition monitoring properties such as electric current, voltage, and cryogen temperature, fibre optic-based monitoring, and/or control of the joint assembly 110.

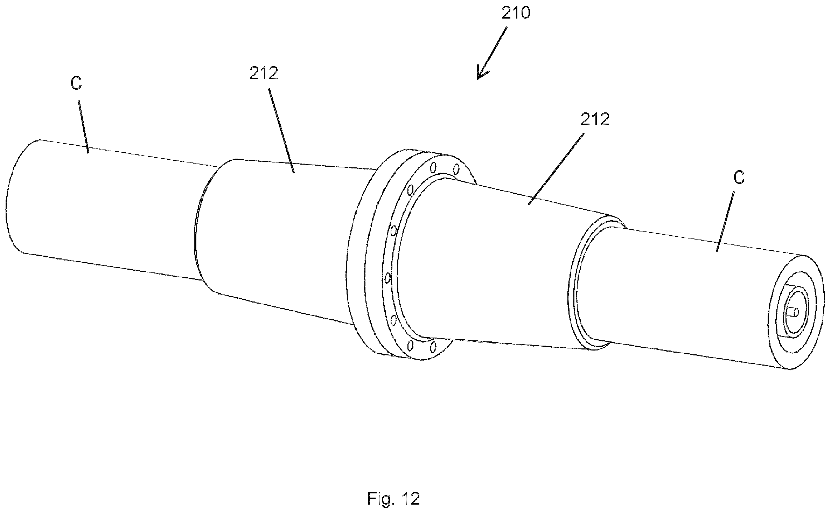

Turning to Figure 12 a third embodiment of a cryostat joint assembly is illustrated, generally indicated as 210. In this alternative embodiment like components have been according like reference numerals and unless otherwise stated perform a like function. The joint assembly 210 omits the coupling of the previous embodiments and comprises a pair of end caps 212 which are adapted to be directly coupled together in order to provide simultaneous electrical and cryogen transmission across the joint assembly 210. This requires one of end caps 214 to be modified to accommodate a single socket (not shown) as hereinbefore described, to be coupled with a plug of the other end cap 214. Suitable modifications would need be employed to connect the socket in fluid communication to an inner cryostat (not shown) of the cable C, and to electrically connect superconducting tapes (not shown) of the cable C to the socket utilising similar methods of connection as hereinbefore described.

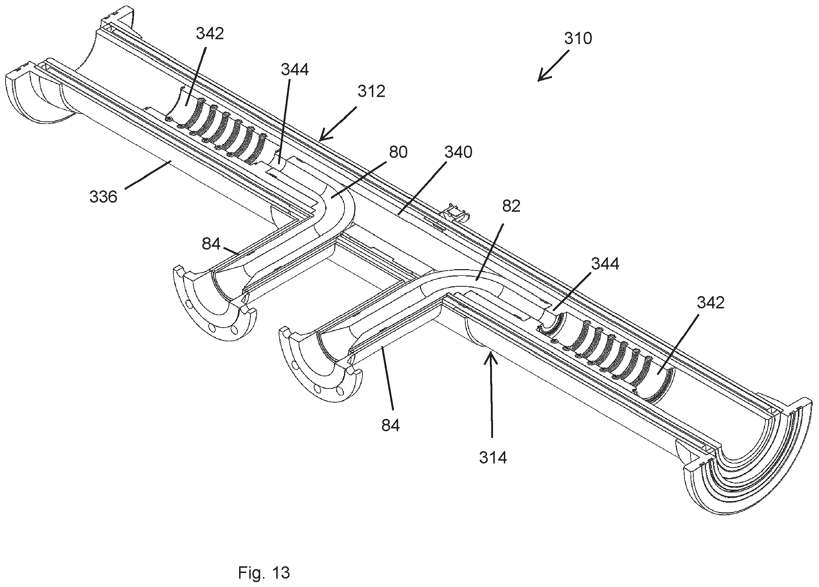

Referring to Figure 13, a fourth embodiment of a cryostat joint assembly is illustrated, generally indicated as 310. In this alternative embodiment like components have been according like reference numerals and unless otherwise stated perform a like function. The joint assembly 310 of this embodiment is adapted to facilitate the extraction and reintroduction of cryogenic fluid from within the joint assembly 310. The joint assembly 310 as illustrated shows only a coupling 314 into which, in use, a pair of the end caps 12 hereinbefore described are connected in the same manner as with the first embodiment, and no further explanation of this aspect of the configuration and operation of the joint assembly 310 is therefore required. In this embodiment, the cryogen fluid flow is broken out and reintroduced from the coupling 314 by transitioning or diverting the cryogen flow path from the axial direction to a radial direction to pass through the coupling 314, allowing the cryogen to be re-cooled or otherwise processed.

The coupling 314 comprises a cylindrical housing 336 located within which is an electrically conductive tubular sleeve 340 formed from copper or the like and defining a pair of sockets 342 for receiving the end caps 12 as hereinbefore described. The sleeve 340 includes an elongate central region defined between a pair of rims 344 such that the two sockets 340 are axially spaced from one another relative to the first embodiment, but remain electrically connected. The coupling 314 further comprises an extraction fluid conduit 80 providing fluid communication between the cryogen flow path within one socket 340 and an exterior of the coupling 314, and a return fluid conduit 82 providing fluid communication between the cryogen flow path within the other socket 342 and the exterior of the coupling 314. The conduits 80, 82 both initially extend in an axial direction from the socket 342 downstream of the respective rim 344, before turning through a smooth radius or elbow to extend in a substantially radial direction relative to the socket 342, passing through the sleeve 340 and the housing 336 before terminating at an end face 84 which may be flanged or otherwise arranged for coupling with additional piping or the like. Conventional pipeline fastenings (not shown) may be employed, such as a circumferential array of nuts and bolts (not shown) to securing the end faces 84 to the appropriate hardware, but it will be understood that any functional equivalent may be employed, for example welding, etc.

The conduits 80, 82 are preferably defined by an elbowed polymer tube that is sealed against the sidewall of the sleeve 340 by means of suitable sealants such as epoxy or the like, but other sealing methods such as sealing rings (not shown) may be used. The portion of each polymer tube located externally of the housing 336 is enclosed in a short length of protective pipe 84 which may be of double wall construction in order to retain a vacuum or other insulation therein. The housing 336 may therefore include such vacuum insulation which may be extended into each of the pipes 84 to cover the polymer tubes to reduce external heat ingress. The sleeve 340 is continuous from one socket 342 to the other, while not exposed to cryogen flow in the section between the polymer elbows, the sleeve 340 nevertheless remains cooled at the either end by exposure to the cryogen flow, and the vacuum insulation within the housing 336 aids in reducing external heat ingress and thus maintaining the sleeve 340 at a beneficially low temperature (from a resistance/Joule Heat perspective).

The ability to breakout the cryogenic fluid flow is beneficial as it allows for operations such as the recooling and re-pressurisation of the cryogenic fluid, thus enabling greater distances of superconducting cable to be kept below the superconducting critical temperature. This breakout ability may also be used to enable the cooling of an adjoining subsystem, the addition of additional cryogen to the flow channel, or to use the cryogen for a different purpose (such as utilising the latent heat of vaporisation). The smooth radius or bend of the polymer elbow and corresponding/complementary geometry to the cryogen flow channel enable a minimising of the pressure loss coefficient of the joint assembly 310 compared to existing technologies such as the use of LN2 baths or tube-and-shell arrangements.

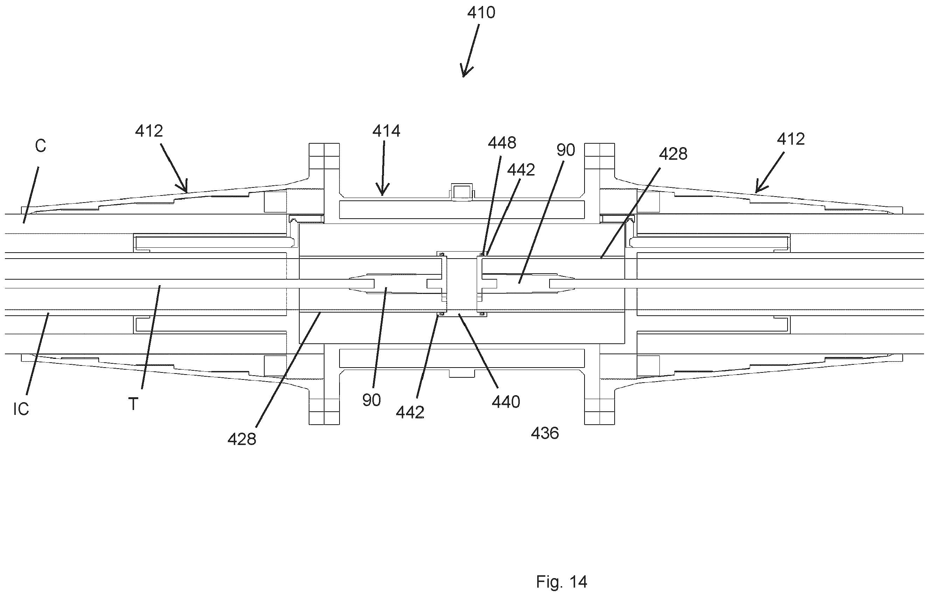

Turning to Figure 14 a fifth embodiment of a cryostat joint assembly is illustrated, generally indicated as 410. In this alternative embodiment like components have been according like reference numerals and unless otherwise stated perform a like function. The joint assembly 410 is arranged for use with superconducting cables C in which superconducting tapes T are located internally of an inner cryostat IC and are therefore immersed in the cryogen in use. The joint assembly 410 comprises a pair of end caps 412 which are connectable into opposed side of an intermediate coupling 414 in order to provide the requisite continuity of electrical transmission and cryogen fluid flow.

Each end cap 412 comprises a plug which includes an axially projecting and exposed connector end 428 to be received within the coupling 414 and which is preferably formed from copper or other suitably conductive material. The superconducting tapes T are electrically connected to the connector 428 in any suitable manner, and in the embodiment illustrated via a copper (or other appropriate material) transition element 90. The coupling 414 comprises a housing 436 located within which is a tubular electrically conductive sleeve 440 which is preferably formed from copper, aluminium or other suitable material, and which defined a pair of sockets 442 for receiving the connector 428 of the respective end cap 412. The sleeve may be provided with a retention element in the form of one or more springs 448 for ensuring robust connection with the connector 428 as hereinbefore described with respect to the first embodiment. Thus in use the end caps 412 are inserted into the coupling 414 and secured thereto as hereinbefore described, thereby establishing an electrical connection between the superconducting tapes T of the two cables C while simultaneously establishing, with the same components, a fluid flow channel for the cryogen.

It will therefore be understood that the cryostat joint assembly 10; 110; 210; 310; 410 of the present invention a connection to be established between two superconducting cable C with relative simplicity, while ensuring a robust electrical and mechanical connection. These electrical continuity and cryogen flow path are simultaneously provided by the same components, namely the tubular and electrically conductive plugs and sockets.

The invention is not limited to the embodiments described herein but can be amended or modified without departing from the scope of the present invention.

## Claims

1. A cryostat joint assembly for connecting a pair of superconducting cables, the joint assembly comprising first and second endcaps each connectable to a terminal end of one of the cables, each end cap comprising an electrically conductive tubular plug or electrically conductive tubular socket; wherein the first and second end caps are connectable with one another to provide a cryogen conduit extending through and at least partially defined by the respective plug or socket such as to simultaneously enable the flow of cryogen and electrical current through the joint assembly.

2. A cryostat joint assembly according to claim 1 in which both end caps comprise electrically conductive tubular plugs, the joint assembly further comprising a coupling connectable between the first and second end caps and defining first and second tubular sockets for respectively receiving the first and second plugs, the pair of sockets being in electrical communication and the coupling partially defining the cryogen flow path extending through the joint assembly.

3. A cryostat joint assembly according to claim 2 in which each plug comprises an electrical connector insertable into the corresponding socket and an electrical terminal adapted to be electrically connected to one or more superconducting elements within the respective superconducting cable.

4. A cryostat joint assembly according to claim 3 in which an outer sidewall of the terminal comprises one or more channels adapted for the electrical and/or mechanical connection of the one or more superconducting elements.

5. A cryostat joint assembly according to claim 4 in which each end plug comprises a reinforcing element operable to reinforce the electrical and/or mechanical connection of the one or more superconducting elements to the terminal.

6. A cryostat joint according to any of claims 2 to 5 in which the or each end cap comprises a cylindrical casing enclosing the terminal and longitudinally beyond which the connector extends, and a mating element for connection to the coupling which extends radially outwardly of the casing.

7. A cryostat joint according to claim 6 comprising a compressible cryogen seal between each plug and the respective socket, and a compressible environmental seal between the mating element and the coupling, wherein the casing is dimensioned to be axially compressed when the mating element is secured to the coupling by an amount sufficient to maintain the seals under cryogenic operating conditions.

8. A cryostat joint according to claim 7 in which the coupling comprises first and second anchoring elements adapted to be secured to the respective mating element of the first and second end caps.

9. A cryostat joint according to claim 9 in which the environmental seal is established between the mating element and the anchoring element.

10. A cryostat joint assembly according to any of claims 2 to 9 in which the coupling comprises a cylindrical housing, an electrically conductive sleeve within the housing defining the pair of sockets in coaxial alignment, and an annular dielectric layer located between the housing and the sleeve.

11. A cryostat joint assembly according to claim 10 in which the sleeve comprises at least one radially inwardly extending circumferential lip axially separating the pair of sockets.

12. A cryostat joint assembly according to any of claims 2 to 11 in which each socket comprises one or more electrically conductive and resiliently deformable contact elements operable to maintain electrical communication between the respective plug and socket.

13. A cryostat joint assembly according to claim 12 in which the one or more contact element comprises at least one circumferentially extending spring located about an interior wall of the socket.

14. A cryostat joint assembly according to any of claims 2 to 13 in which the coupling comprises an extraction fluid conduit providing fluid communication between the cryogen flow path within the first socket and an exterior of the coupling, and a return fluid conduit providing fluid communication between the cryogen flow path within the second socket and the exterior of the coupling.

15. A cryostat joint assembly according to claim 14 in which each of the extraction fluid conduit and the return fluid conduit are adapted to prevent electrical communication between the first and second socket and the exterior of the coupling.
